# EUROPÄISCHE PATENTSCHRIFT

(11) **EP 3 497 426 B1**
(45) Veröffentlichungstag und Bekanntmachung des Hinweises auf die Patenterteilung: **01.01.2020**
(21) Anmeldenummer: 17752275.2
(22) Anmeldetag: 09.08.2017
(51) Int. Cl.: G01M 15/08, F02D 41/00, F02D 35/02

(54) **VERFAHREN ZUR BEURTEILUNG DES ZUSTANDS EINER BRENNKRAFTMASCHINE**
METHOD FOR ASSESSING THE STATE OF AN INTERNAL COMBUSTION ENGINE
PROCÉDÉ D'ÉVALUATION DE L'ÉTAT D'UN MOTEUR À COMBUSTION INTERNE

(30) Priorität: 09.08.2016 AT 507252016
(43) Veröffentlichungstag der Anmeldung: 19.06.2019
(73) Patentinhaber: AVL List GmbH, 8020 Graz (AT)
(72) Erfinder: TEICHMANN, Rüdiger, 8075 Hart B. Graz (AT); ABART, Martin, 8010 Graz (AT)
(74) Vertreter: Babeluk, Michael
(86) Internationale Anmeldenummer: PCT/AT2017/060200
(87) Internationale Veröffentlichungsnummer: WO 2018/027251

(56) Entgegenhaltungen:
- DE-A1- 3 704 837
- US-A1- 2010 250 089
- US-A1- 2011 088 459

## Beschreibung

Die Erfindung betrifft ein Verfahren zur Beurteilung des Zustands einer Brennkraftmaschine mit mehreren Zylindern mit einem ersten Drucksensor und einem zweiten Drucksensor, die mit einer Auswerteinheit verbunden sind, wobei mit den Drucksensoren jeweils ein Zylinderdruck gemessen wird, wobei der erste Drucksensor ein Referenzmesssignal eines als Referenzzylinder angenommenen Zylinders der Brennkraftmaschine misst, und dass der zweite Drucksensor ein erstes Messsignal eines vom Referenzzylinder unterschiedlichen ersten Zylinders misst und das Referenzmesssignal des Referenzzylinders und das erste Messsignal an die Auswerteinheit weitergegeben werden.

Um den Zustand einer Brennkraftmaschine beurteilen zu können existieren zwei Herangehensweisen :
Zum einen kann mithilfe eines einzigen Drucksensors jeder Zylinder über einen bestimmten Zeitraum gemessen werden. Dabei wird nur ein Drucksensor benötigt. Dadurch ist die Anwendung dieses Verfahrens einfach und günstig. Aufgrund von Lastwechsel kann es jedoch zu Abweichungen zwischen den gemessenen Drucksignalen der einzelnen Zylinder kommen. Das stellt ein Problem bei der Auswertung dar, da diese Einflüsse einen nicht vernachlässigbaren Fehler für die Beurteilung des Zustandes der Brennkraftmaschine darstellen.

Andererseits kommen Verfahren zur Beurteilung des Zustands einer Brennkraftmaschine zum Einsatz, die pro Zylinder einen Drucksensor vorsehen. Dabei werden für alle Zylinder die Zylinderdrücke gleichzeitig gemessen und es kann somit festgestellt werden, inwieweit sich die einzelnen Zylinder voneinander unterscheiden und welche Änderungen der Messsignale auf Lastwechsel zurückzuführen sind.

Dieses Verfahren ist beispielsweise aus der DE 37 04 837 A1 bekannt. Darüber hinaus ist darin ein Ausgangskompensationsverfahren für die Messungen von Zylinderdrücken für Brennkraftmaschinen gezeigt. Dabei ist vorgesehen, dass jeder Zylinder je einen piezoelektrischen Drucksensor aufweist. Ebenso ist ein Kurbelwinkelsensor zur Feststellung der Position der Kurbelwelle vorgesehen. Es wird in einer Ausführungsvariante der Druck durch eine berechnete Fluktuationsrate korrigiert.

Nachteilig daran ist, dass pro Zylinder ein Drucksensor vorgesehen werden muss. Dadurch werden je nach Zylinderanzahl mehr Drucksensoren benötigt. Das macht dieses Verfahren aufwendig und teuer. Auch die Auswertung der Messsignale wird pro zusätzlichem Zylinder komplizierter.

Ähnlich ist die Lösung, die aus US 2010/250089 A1 oder DE 37 04837 A1 bekannt ist. Dabei wird ebenfalls für jeden Zylinder ein Sensor benötigt und ein Verfahren zur Verbesserung des Messergebnisses angegeben. Dabei ist jedoch vor allem das Vorsehen eines Sensors für jeden Zylinder sehr kostenintensiv.

Aufgabe der vorliegenden Erfindung ist es diese Nachteile zu beseitigen und ein Verfahren zur Beurteilung des Zustandes einer Brennkraftmaschine anzugeben, welches einfach und günstig zu realisieren ist.

Erfindungsgemäß wird diese Aufgabe durch das einleitend beschriebene Verfahren dadurch erfüllt, dass nach Messung des ersten Messsignals des ersten Zylinders mit dem zweiten Drucksensor zumindest eine weitere Messung zumindest eines weiteren, vom Referenzzylinder unterschiedlichen Zylinders mit dem zweiten Drucksensor erfolgt, und dass zumindest ein dabei ermitteltes weiteres Messsignal an die Auswerteinheit weitergegeben wird, und dass währenddessen der erste Drucksensor ein Referenzmesssignal an die Auswerteinheit weitergibt. Somit kann das Verfahren für beliebig viele Zylinder, oder die gesamte Brennkraftmaschine angewendet werden, ohne dass die Kosten und der Aufwand steigen.

Es ist für die Durchführung des Verfahrens somit nur eine Auswerteinheit notwendig, die immer die gleiche Anzahl an Sensoren vorsieht. Der Rechenaufwand hält sich somit in Grenzen und bleibt einfach. Des Weiteren werden nur zwei Drucksensoren benötigt.

Es ist günstig, wenn das erste Messsignal des ersten Zylinders und das Referenzmesssignal des Referenzzylinders durch die Auswerteinheit miteinander verglichen werden. Dadurch können beispielsweise Lastwechsel kompensiert werden. In weiterer Folge ist es möglich die Ergebnisse zu Diagnosezwecken weiterzugeben und dazu Arbeit oder Leistung zu berechnen und die Ergebnisse der einzelnen Zylinder miteinander zu vergleichen.

Der gleiche Vorteil ergibt sich, wenn zumindest ein weiteres Messsignal des zumindest einen weiteren, vom Referenzzylinder unterschiedlichen Zylinders und das Referenzmesssignal des Referenzzylinders durch die Auswerteinheit miteinander verglichen werden.

Besonders günstig ist es, wenn zwischen einem Messsignal und dem Referenzmesssignal durch Vergleich festgestellte Differenzen aufgrund eines sich ändernden Betriebszustandes der Brennkraftmaschine von der Auswerteinheit mathematisch korrigiert werden. Mit anderen Worten werden Differenzen zwischen einem Messsignal und dem Referenzmesssignal, die durch einen sich ändernden Betriebszustand der Brennkraftmaschine bedingt sind, von der Auswerteinheit mathematisch korrigiert. Dadurch können sich ändernde Lastzustände ausgeglichen werden, da alle gemessenen Signale durch Lastwechsel während des Messablaufs beeinflusst werden. Darüber hinaus kann ein Ablesefehler durch einen Anwender des Verfahrens durch eine mathematische Korrektion vermieden werden. Der Anwender könnte den Lastwechsel der Brennkraftmaschine verkennen und die Differenzen zwischen den einzelnen Messsignalen auf den Zustand, beispielsweise auf die Abnützung, der Brennkraftmaschine zurückführen. Der sich ändernde Betriebszustand wird dabei beispielsweise von der Auswerteinheit detektiert bzw. von einem Motorsteuergerät an die Auswerteinheit übermittelt.

Um eine genaue Analyse der Messsignale durchführen zu können ist es vorteilhaft, wenn die Auswerteinheit die Messsignale des ersten Drucksensors und des zweiten Drucksensors einem Kurbelwinkel einer Kurbelwelle zuordnet.

Besonders einfach lässt sich das realisieren, wenn während der Messungen ein Sensor den Kurbelwinkel der Kurbelwelle bestimmt und an die Auswerteinheit weitergibt.

Um eine Anordnung mit möglichst wenigen Sensoren zu erhalten, ist es günstig, wenn der Kurbelwinkel der Kurbelwelle durch die Auswerteinheit anhand der Messsignale des ersten Drucksensors und des zweiten Drucksensors bestimmt wird.

Die Erfindung wird anhand der nicht einschränkenden Figuren näher erläutert. Es zeigen:
- Fig. 1: eine schematische Darstellung der Anwendung eines erfindungsge-mäßen Verfahrens in einem ersten Schritt;
- Fig. 2: eine schematische Darstellung der Anwendung des Verfahrens in einem zweiten Schritt; und
- Fig. 3: eine schematische Darstellung der Anwendung des Verfahrens in einem weiteren Schritt.

Zur Beurteilung eines Zustands einer Brennkraftmaschine 1 mit mehreren Zylindern ist eine Auswerteinheit 2 mit zwei Drucksensoren und einem Sensor 3 zur Bestimmung eines Kurbelwinkels a vorgesehen. Dabei wird ein Zylinder als Referenzzylinder 4 ausgewählt und ein erster Drucksensor 5 angebracht. Der erste Drucksensor 5 misst ein Referenzmesssignal A und gibt es an die Auswerteinheit 2 über eine erste Leitung 6 weiter.

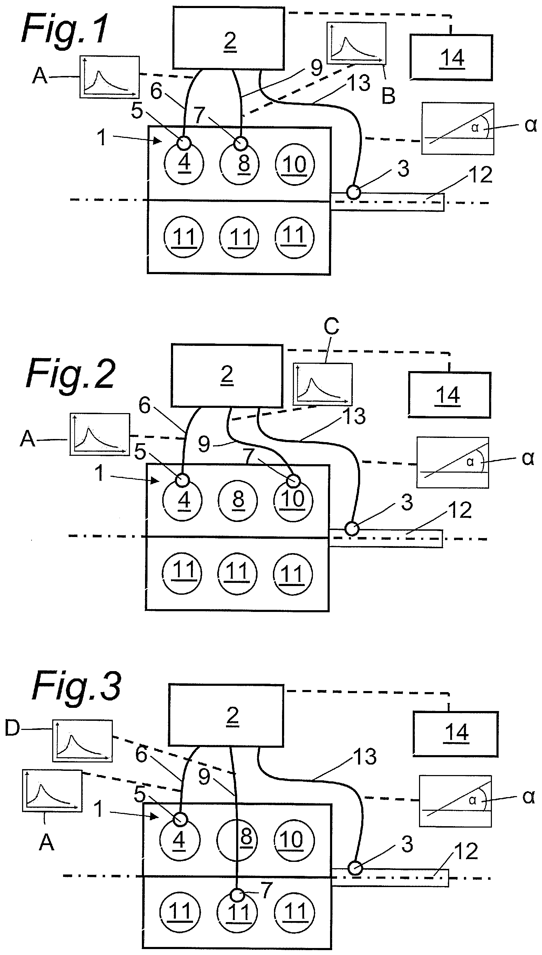

Ein zweiter Drucksensor 7 misst in einem ersten Schritt (Fig. 1) ein erstes Mess-signal B eines ersten, vom Referenzzylinder 4 unterschiedlichen Zylinders 8 und gibt es über eine zweite Leitung 9 an die Auswerteinheit 2 weiter.

Danach wird in einem zweiten Schritt, wie in Fig. 2 gezeigt, der zweite Drucksensor 7 an einem ersten weiteren Zylinder 10 angebracht. Damit wird ein erstes weiteres Messsignal C gemessen. Der zweite Drucksensor 7 gibt das erste weitere Mess-signal C an die Auswerteinheit 2 weiter. Gleichzeitig mit der Messung des zweiten Drucksensors 7 wird immer noch das Referenzmesssignal A des Referenzzylinders 4 an die Auswerteinheit 2 übermittelt.

Wie in Fig. 3 gezeigt, wird nach dieser Messung der zweite Drucksensor 7 an einem der verbliebenen weiteren Zylindern 11 angebracht und die weiteren Messsignale D an die Auswerteinheit 2 weitergegeben.

Durch die Auswerteinheit 2 werden das Messsignal B, das erste weitere Mess-signal C und die weiteren Messsignale D mit den jeweils zeitgleich aufgenommenen Referenzmesssignalen A verglichen. Wenn nun zum Beispiel während eines Lastwechsels große Abweichungen zu vorhergehenden Messungen entstehen, kann der Verlauf des Messsignals B durch Vergleich mit dem Verlauf des Referenzmesssignals A ausgeglichen werden: Dabei wird das erste weitere Messsignal C beispielsweise um die Differenz eines Referenzmesssignals A zu einem vorhergehenden Referenzmesssignals A mathematisch korrigiert. Analog dazu wird mit den weiteren Messsignalen D vorgegangen.

Der Sensor 3 zur Ermittlung des Kurbelwinkels a dient der Zuordnung des ersten Messsignals B, des ersten weiteren Messsignals C, der weiteren Messsignale D und des Referenzmesssignals A zu einer Position einer Kurbelwelle 12. Über ein Kabel 13 ist der Sensor 3 mit der Auswerteinheit 2 verbunden.

Nach diesem Schema werden die Drücke aller Zylinder der Brennkraftmaschine 1 über dem Kurbelwinkel a gemessen. Durch die Zuordnung der Messsignale A, B, C, D zu einem Kurbelwinkel a kann der Vergleich der einzelnen Verläufe der Messsignale A, B, C, D von der Auswerteinheit 2 genauer durchgeführt werden. Somit ist es möglich für definierte Kurbelwinkel a das jeweilige Messsignal A, B, C, D zu vergleichen und die Differenz an genau dieser Stelle des Verlaufes wiederum zu berücksichtigen.

Es kann in einer Ausführung auf die Vorsehung eines Sensors 3 zur Ermittlung des Kurbelwinkels a verzichtet werden, da aufgrund der Verläufe der Messsignale eine Zuordnung dieser zu einem Kurbelwinkel a rechnerisch erfolgen kann.

Von der Auswerteinheit 2 werden die Messsignale A, B, C, D zylinderweise ausgewertet und beispielsweise der indizierte effektive Mitteldruck oder der maximale Zylinderdruck für jeden Zylinder bestimmt. Dies geschieht unter Berücksichtigung des Referenzmesssignals A. Aus dem Referenzmesssignal A werden Abweichungen aufgrund eines sich ändernden Betriebszustandes der Brennkraftmaschine 1 erkannt und bei der Auswertung berücksichtigt.

Die Auswerteinheit 2 bestimmt neben einzelnen Messverläufen aus den Messsignalen für jeden Zylinder auch gemittelte Größen für die ganze Brennkraftmaschine 1.

Des Weiteren kann das Referenzmesssignal A als zeitliche Orientierung dienen, da die Zündfolge der Zylinder bekannt ist.

Aufgrund der Messsignale A, B, C, D kann ein Ausgleich der Kraftstoffversorgung für die einzelnen Zylinder, den Referenzzylinder 4, den ersten Zylinder 8 und die weiteren Zylinder 10, 11 über eine Steuerungseinrichtung 14 erfolgen. Dabei können Arbeit oder Leistung, oder der indizierte effektive Mitteldruck, die Höchstdrücke, oder die Abgastemperatur der einzelnen Zylinder betrachtet werden. Eine Steuerungseinrichtung 14 wirkt dann aufgrund der Messsignale A, B, C, D ausgleichend auf die Brennkraftmaschine 1 ein. Diese Steuerungseinrichtung 14 kann beispielsweise über eine strichliert gezeigte Funkverbindung mit der Auswerteinheit 2 verbunden sein, oder die Eingabe in die Steuerungseinrichtung 14 erfolgt manuell durch einen Anwender.

## Patentansprüche

1. Verfahren zur Beurteilung des Zustands einer Brennkraftmaschine (1) mit mehreren Zylindern mit einem ersten Drucksensor (5) und einem zweiten Drucksensor (7), die mit einer Auswerteinheit (2) verbunden sind, wobei mit den Drucksensoren (5, 7) jeweils ein Zylinderdruck gemessen wird wobei der erste Drucksensor (5) ein Referenzmesssignal (A) eines als Referenzzylinder (4) angenommenen Zylinders der Brennkraftmaschine (1) misst und der zweite Drucksensor (7) ein erstes Messsignal (B) eines vom Referenzzylinder (4) unterschiedlichen ersten Zylinders (8) misst, und dass das Referenzmesssignal (A) des Referenzzylinders (4) und das erste Messsignal (B) an die Auswerteinheit (2) weitergegeben werden, **dadurch gekennzeichnet, dass** nach Messung des ersten Messsignals (B) des ersten Zylinders (8) mit dem zweiten Drucksensor (7) zumindest eine weitere Messung zumindest eines weiteren, vom Referenzzylinder (4) unterschiedlichen Zylinders (10, 11) mit dem zweiten Drucksensor (7) erfolgt, und dass zumindest ein dabei ermitteltes weiteres Messsignal (C, D) an die Auswerteinheit (2) weitergegeben wird, und dass währenddessen der erste Drucksensor (5) ein Referenzmesssignal (A) an die Auswerteinheit (2) weitergibt.

2. Verfahren nach Anspruch 1, **dadurch gekennzeichnet, dass** zumindest ein weiteres Messsignal (C, D) des zumindest einen weiteren, vom Referenzzylinder (4) unterschiedlichen Zylinders (10, 11) und das Referenzmesssignal (A) des Referenzzylinders (4) durch die Auswerteinheit (2) miteinander verglichen werden.

3. Verfahren nach Anspruch 1 oder 2, **dadurch gekennzeichnet, dass** das erste Messsignal (B) des ersten Zylinders (8) und das Referenzmesssignal (A) des Referenzzylinders (4) durch die Auswerteinheit (2) miteinander verglichen werden.

4. Verfahren nach einem der Ansprüche 1 bis 3, **dadurch gekennzeichnet, dass** zwischen einem Messsignal (B, C, D) und dem Referenzmesssignal (A) durch Vergleich festgestellte Differenzen aufgrund eines sich ändernden Betriebszustandes der Brennkraftmaschine (1), von der Auswerteinheit (2) mathematisch korrigiert werden.

5. Verfahren nach einem der Ansprüche 1 bis 4, **dadurch gekennzeichnet, dass** die Auswerteinheit (2) die Messsignale (A, B, C, D) des ersten Drucksensors (5) und des zweiten Drucksensors (7) einem Kurbelwinkel (a) einer Kurbelwelle (12) zuordnet.

6. Verfahren nach Anspruch 5, **dadurch gekennzeichnet, dass** während der Messungen ein Sensor (3) den Kurbelwinkel (a) der Kurbelwelle (12) bestimmt und an die Auswerteinheit (12) weitergibt.

7. Verfahren nach Anspruch 5, **dadurch gekennzeichnet, dass** der Kurbelwinkel (a) der Kurbelwelle (12) durch die Auswerteinheit (2) anhand der Messsignale (A, B, C, D) des ersten Drucksensors (5) und des zweiten Drucksensors (7) bestimmt wird.

## Claims

1. Method for assessing the state of an internal combustion engine (1) having a plurality of cylinders with a first pressure sensor (5) and a second pressure sensor (7) which are connected to an evaluation unit (2), wherein a cylinder pressure is measured in each case with the pressure sensors (5, 7), wherein the first pressure sensor (5) measures a reference measurement signal (A) of a cylinder of the internal combustion engine (1) assumed to be the reference cylinder (4) and the second pressure sensor (7) measures a first measurement signal (B) of a first cylinder (8) which is different from the reference cylinder (4), and in that the reference measurement signal (A) of the reference cylinder (4) and the first measurement signal (B) are passed on to the evaluation unit (2), **characterised in that,** after measurement of the first measurement signal (B) of the first cylinder (8), at least one further measurement of at least one further cylinder (10, 11) which is different from the reference cylinder (4) is carried out with the second pressure sensor (7), and **in that** at least one further measurement signal (C, D) determined in the process is transmitted to the evaluation unit (2), and **in that**, during this time, the first pressure sensor (5) transmits a reference measurement signal (A) to the evaluation unit (2).

2. Method according to claim 1, **characterised in that** at least one further measurement signal (C, D) of the at least one further cylinder (10, 11), which differs from the reference cylinder (4), and the reference measurement signal (A) of the reference cylinder (4) are compared with one another by the evaluation unit (2).

3. Method according to claim 1 or 2, **characterised in that** the first measurement signal (B) of the first cylinder (8) and the reference measurement signal (A) of the reference cylinder (4) are compared with one another by the evaluation unit (2).

4. Method according to one of claims 1 to 3, **characterised in that** differences between a measurement signal (B, C, D) and the reference measurement signal (A) which are determined by comparison on the basis of a changing operating state of the internal combustion engine (1) are mathematically corrected by the evaluation unit (2).

5. Method according to one of claims 1 to 4, **characterised in that** the evaluation unit (2) assigns the measurement signals (A, B, C, D) of the first pressure sensor (5) and of the second pressure sensor (7) to a crank angle (a) of a crankshaft (12).

6. Method according to claim 5, **characterised in that** during the measurements a sensor (3) determines the crank angle (a) of the crankshaft (12) and transmits it to the evaluation unit (12).

7. Method according to claim 5, **characterised in that** the crank angle (a) of the crankshaft (12) is determined by the evaluation unit (2) on the basis of the measurement signals (A, B, C, D) of the first pressure sensor (5) and of the second pressure sensor (7).

## Revendications

1. Procédé d'évaluation de l'état d'un moteur à combustion interne (1) ayant plusieurs cylindres avec un premier capteur de pression (5) et un second capteur de pression (7) qui sont reliés à une unité d'analyse (2), selon lequel, avec les capteurs de pression (5, 7) on mesure respectivement la pression dans un cylindre, le premier capteur de pression (5) mesurant un signal de mesure de référence (A) d'un cylindre du moteur à combustion interne (1) correspondant à un cylindre de référence (4) et le second capteur de pression (7) mesurant un premier signal de mesure (B) d'un premier cylindre (8) différent du cylindre de référence (4), et le signal de mesure de référence (A) du cylindre de référence (4) et le premier signal de mesure (B) étant transmis à l'unité d'analyse (2),
**caractérisé en ce qu'**
après la mesure du premier signal de mesure (B) du premier cylindre (8), avec le second capteur de pression (7), on effectue au moins une autre mesure d'au moins un autre cylindre (10, 11) différent du cylindre de référence (4) avec le second capteur de pression (7), on transmet au moins un autre signal de mesure (C, D) ainsi déterminé à l'unité d'analyse (2), et, simultanément, le premier capteur de pression (5) transmet un signal de mesure de référence (A) à l'unité d'analyse (2).

2. Procédé conforme à la revendication 1,
**caractérisé en ce qu'**
au moins un autre signal de mesure (C, D) de l'autre cylindre (10, 11) différent du cylindre de référence (4) et le signal de mesure de référence (A) du cylindre de référence (4) sont comparés par l'unité d'analyse (2).

3. Procédé conforme à la revendication 1 ou 2,
**caractérisé en ce que**
le premier signal de mesure (B) du premier cylindre (8) et le signal de mesure de référence (A) du cylindre de référence (4) sont comparés par l'unité d'analyse (2).

4. Procédé conforme à l'une des revendications 1 à 3,
**caractérisé en ce que**
des différences entre un signal de mesure (B, C, D) et le signal de référence (A) déterminées par comparaison sont corrigés mathématiquement par l'unité d'analyse (2) sur le fondement d'un état de fonctionnement se modifiant du moteur à combustion interne (1).

5. Procédé conforme à l'une des revendications 1 à 4,
**caractérisé en ce que**
l'unité d'analyse (2) associe les signaux de mesure (A, B, C, D) du premier capteur de pression (5) et du second capteur de pression (7) à l'angle (a) d'un vilebrequin (12).

6. Procédé conforme à la revendication 5,
**caractérisé en ce que**
pendant les mesures un capteur (3) détermine l'angle (a) du vilebrequin (12) et le transmet à l'unité d'analyse (12).

7. Procédé conforme à la revendication 5,
**caractérisé en ce que**
l'angle (a) du vilebrequin (12) est déterminé par l'unité d'analyse (2) sur le fondement des signaux de mesure (A, B, C, D) du premier capteur de pression (5) et du second capteur de pression (7).
